Europäisches Patentamt

European Patent Office

Office européen des brevets

(19)

(11) Numéro de publication : **0 102 278**
**B1**

(12) **FASCICULE DE BREVET EUROPÉEN**

(45) Date de publication du fascicule du brevet :
11.11.87

(51) Int. Cl.⁴ : **G 06 F 13/18,** G 06 F 13/40,
G 06 F 13/36

(21) Numéro de dépôt : 83401573.7

(22) Date de dépôt : 29.07.83

(54) **Dispositif de couplage universel pour la mise en communication d'ensembles de traitement d'informations et d'au moins une unité périphérique.**

(30) Priorité : 06.08.82 FR 8213765

(43) Date de publication de la demande :
07.03.84 Bulletin 84/10

(45) Mention de la délivrance du brevet :
11.11.87 Bulletin 87/46

(84) Etats contractants désignés :
CH DE GB IT LI NL SE

(56) Documents cités :
US-A- 4 007 448
IBM TECHNICAL DISCLOSURE BULLETIN, vol. 22,
no. 2, juillet 1979, pages 656-658, New York, US; O.L.
MacSORLEY: "Processor to processor final communication"
MICROCOMPUTER ARCHITECTURES. THIRD EURO-
MICRO SYMPOSIUM ON MICROPROCESSING AND
MICROPROGRAMMING, 3-6 octobre 1977, pages 175-
181, North-Holland Publishing Company, Amsterdam
NL; O.CAPRANI et al.: "Microprocessors connected
to a common memory"
COMPUTER DESIGN, vol. 13, no. 3, mars 1974, pages
81-86, Concord, US; G.REYLING: "Performance and
control of multiple microprocessor systems"
Revue "Elektronik", Sonderheft Nr. 47, "IEC-Bus,
Grundlagen - Technik - Anwendungen", pages 16-20
et 80-81, München 1981

(73) Titulaire : Ozil, Maurice
73, rue des Morillons
F-75015 Paris (FR)

Falguieres, Alain
44, rue Victor Hugo
F-92800 Puteaux (FR)

(72) Inventeur : Ozil, Maurice
73, rue des Morillons
F-75015 Paris (FR)
Inventeur : Falguieres, Alain
44, rue Victor Hugo
F-92800 Puteaux (FR)

(74) Mandataire : Mongrédien, André et al
c/o BREVATOME 25, rue de Ponthieu
F-75008 Paris (FR)

## Description

La présente invention concerne un dispositif d'informations de couplage universel, pour la mise en communication d'ensembles de traitements comprenant au moins des calculateurs ou processeurs, avec au moins une unité périphérique. Elle s'applique notamment aux ensembles multicalculateurs dans lesquels il est nécessaire d'échanger des informations entre les mémoires de plusieurs ensembles de traitement et une ou plusieurs unités périphériques, telles que dérouleurs de bandes magnétiques ou disques par exemple.

D'une façon générale, un ensemble de traitement est une entité logique de traitement pouvant comporter un ou plusieurs processeurs ou calculateurs, éventuellement réalisés à l'aide de microprocesseurs et des unités d'entrée-sortie et éventuellement des unités périphériques.

On connaît des dispositifs de couplage qui permettent de gérer les échanges d'informations entre plusieurs ensembles de traitement et au moins une unité périphérique ; généralement, ces dispositifs de couplage sont conçus en fonction de chaque type de périphérique à mettre en communication avec plusieurs ensembles de traitement ; il en résulte que la connexion d'un autre type de périphérique, oblige l'utilisateur à concevoir un nouveau dispositif de couplage adapté au nouveau périphérique choisi. Cette impossibilité de banaliser le raccordement de périphériques de types quelconques dans un ensemble multicalculateurs entraîne des délais très longs de raccordement, un investissement élevé à l'occasion de chaque couplage d'un nouveau périphérique, un nombre de dispositifs distincts de couplage pour un même ensemble multicalculateur, des choix difficiles d'unités périphériques.

Un dispositif de couplage de ce type est décrit dans le document (D4), revue « IBM Technical Disclosure Bulletin », volume N° 22, N° 2, Juillet 1979, pages 656-658, New York, USA.

D'autres dispositifs de couplage sont décrits dans les documents suivants :

(D1) revue « Electronik » Sonderheft N° 47, « IEC-Bus, Grundlagen — Technik — Anwendungen », pages 16-20 et 80-81, München 1981,

(D2) revue « Computer Design », volume 13, numéro 3, mars 1974, pages 81-86, Concord, USA,

(D3) le brevet US-A-4 007 448.

Le premier document (D1) décrit un dispositif de couplage standardisé et des contrôleurs de bus adaptés aux normes du dispositif. Ce dispositif ne permet pas un couplage de n'importe quelle unité de traitement avec n'importe quelle unité périphérique, sans adaptation, puisqu'il est standardisé.

Le deuxième document (D2) décrit un dispositif de couplage multiprocesseur ne comportant pas de contrôleur de bus. Les échanges de données sur le bus sont de ce fait très complexes et le dispositif est peut adaptable pour connecter n'importe quelle unité périphérique à un système multiprocesseur.

Le troisième document (D3) décrit une interface spécialisée reliée à des contrôleurs, cette interface étant peu adaptable pour connecter n'importe quelle unité périphérique à un système multiprocesseur.

L'invention a pour but de remédier aux inconvénients des dispositifs de couplage mentionnés plus haut et notamment de réaliser un dispositif de couplage entre plusieurs ensembles de traitement, calculateurs par exemple, et au moins une unité périphérique qui permet, de façon simple, le raccordement d'une unité périphérique d'un type quelconque avec plusieurs processeurs ou calculateurs, même si cette unité et ces processeurs ont des spécifications fonctionnelles qui rendent ordinairement leurs fonctionnements difficilement compatibles. Ce dispositif de couplage, outre le fait qu'il autorise et qu'il simplifie la connexion de n'importe quelle unité périphérique avec des ensembles de traitement, permet également de gérer facilement les conflits de demandes d'accès des ensembles de traitement à chaque unité périphérique. De plus, l'invention a pour but d'augmenter la disponibilité d'accès entre des ensembles de traitement et une unité périphérique en offrant un accès par deux bus physiquement distincts.

Enfin, l'invention a pour but, dans un système multiprocesseur utilisant des contrôleurs, de décharger au maximum les opérations effectuées par ces contrôleurs pour faciliter le couplage de ces contrôleurs avec toute unité périphérique.

L'invention a pour objet un dispositif de couplage universel pour la mise en communication d'ensembles de traitement (4, 5) d'informations et d'au moins une unité périphérique (6), chaque ensemble (4 ou 5) de traitement comprenant au moins un processeur (2 ou 3) et un bus d'échanges pour échanger des données avec l'unité périphérique (16), comprenant des contrôleurs de bus (18, 19) reliés respectivement aux bus d'échanges (9, 10) et à un bus local (17) lui-même relié à l'unité périphérique (6) par l'intermédiaire de moyens de commande (21) d'échanges de données et de traitements des informations de commande fournis par les processeurs et des informations d'état de l'unité périphérique, les contrôleurs de bus étant aptes à gérer les échanges d'informations sur les bus d'échanges (9, 10) et sur le bus local (17) ainsi que toute demande faite par un processeur pour accéder à l'unité périphérique via le bus local (17), caractérisé en ce que les moyens de commande (21) comprennent un microprocesseur (22) de gestion de priorités des demandes d'accès faites par les processeurs (2, 3) et de traitement des informations de commande fournies par le processeur demandant un accès au bus local et des informations d'état de l'unité périphérique, ces informations étant échangées sur le bus local (17), ce microprocesseur de gestion étant relié à l'unité périphérique (6) et aux contrôleurs de bus (18, 19), des moyens de sélection (26) reliés aux contrôleurs de bus (18, 19) et commandés par le microprocesseur de gestion, pour sélectionner en fonction des priorités, le contrôleur apte à assurer un échange de données sur le bus local (17), et un registre tampon (27) d'entrée et de sortie relié aux contrôleurs par le bus local (17) et à l'unité périphérique (6), pour recevoir les données à transmettre à l'unité périphérique (6) ou pour recevoir les données provenant de l'unité périphérique et à transmettre à l'un des processeurs (2, 3), chaque processeur (2 ou 3) souhaitant accéder à l'unité périphérique (6) envoyant au microprocesseur (22) de gestion un bloc d'informations de commande, le microprocesseur de gestion (22) envoyant au processeur le plus prioritaire un bloc d'informations « d'accusé de réception » et appliquant les informations de commande à l'unité périphérique et au registre tampon pour que les données de l'ensemble de traitement soient transmises à l'unité périphérique via le registre tampon, ou que les données de l'unité périphérique soient transmises à l'ensemble de traitement via le registre tampon.

Selon un mode particulier de réalisation de la présente invention, les moyens de sélection comprennent un circuit de contrôle de code des données reliant le bus local avec le registre tampon d'entrée et de sortie.

Enfin, selon un autre mode de réalisation de la présente invention, le circuit de contrôle comprend une mémoire tampon reliée au bus local et au registre tampon d'entrée et de sortie, et un dispositif relié à cette mémoire pour contrôler un code de type « cyclique » des données.

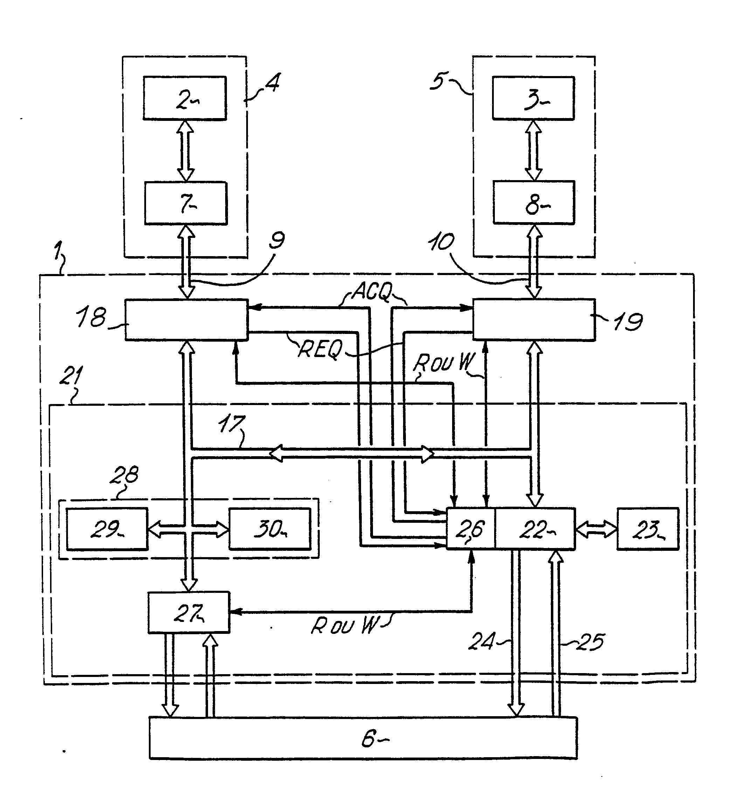

Les caractéristiques et avantages de l'invention ressortiront bien de la description qui va suivre, donnée en référence à la figure unique annexée qui représente schématiquement l'ensemble de couplage conforme à l'invention.

L'ensemble de couplage 1 représenté schématiquement sur la figure permet de mettre en communication des ensembles de traitement 4 et 5 avec au moins une unité périphérique 6, telle qu'un dérouleur de bande magnétique ou un disque par exemple. Les processeurs 2, 3 de ces ensembles de traitement sont respectivement reliés à des contrôleurs de bus 7, 8 qui permettent l'échange des informations entre les ensembles de traitement et l'unité périphérique 6. Ces échanges d'informations sont effectués à travers des bus d'échanges 9, 10, chacun de ces bus étant associé aux processeurs de chaque ensemble de traitement. Ces informations contiennent de façon connue, des données, des commandes et des états, exprimés sous forme binaire. Les commandes sont des ordres qui sont donnés aux ensembles de traitement ou à l'unité périphérique pour l'exécution d'une action. Les états permettent d'exprimer sous forme binaire les situations dans lesquelles se trouvent l'unité périphérique, avant, pendant ou après l'exécution d'une action. Les bus 9, 10 d'échanges représentés schématiquement sur cette figure, sont bien connus dans l'état de la technique et peuvent être par exemple des bus définis par la norme I EEE 488. Dans l'exemple de réalisation considéré, on a limité à un le nombre d'unités périphériques, et à deux le nombre de bus d'échanges 9, 10, mais il est bien évident que ces nombres peuvent être différents. Par exemple, l'unité périphérique 6 pourrait être remplacée par une série d'unités périphériques reliées en série ou en parallèle.

L'ensemble de couplage 1 comprend pour chaque bus d'échanges 9, 10, un contrôleur de bus. Ces contrôleurs de bus 18, 19 sont reliés à un bus local 17 et assurent la gestion des protocoles d'accès aux bus spécifiques 9, 10 correspondants. Ces contrôleurs de bus sont connus et peuvent être par exemple des contrôleurs du type TMS 9914 définis par la norme I EEE 488. Les protocoles, de façon connue, sont des conventions qui définissent le déroulement des échanges d'informations entre les bus spécifiques 9, 10 et les contrôleurs de bus 18, 19.

Le dispositif comprend aussi des moyens de commande 21 qui comportent un microprocesseur 22 associé à une mémoire programme 23 ; ce microprocesseur permet de gérer les priorités des demandes d'accès des processeurs 2, 3 des ensembles de traitement 4, 5, et il permet également de traiter les commandes et les états contenus dans les informations échangées sur le bus local 17. Ces commandes et ces états sont fournis ou reçus par le microprocesseur de gestion 22 sur un bus de commande 24 et sur un bus d'état 25. Les moyens de commande comprennent aussi des moyens de sélection 26 qui sont reliés aux contrôleurs de bus 18, 19 et qui sont commandés par le microprocesseur de gestion 22, pour sélectionner en fonction des priorités, celui de ces contrôleurs qui peut assurer à un instant donné, un échange de données.

Les moyens de commande comprennent aussi un registre d'entrée et de sortie 27 qui est relié au bus local 17 et à l'unité périphérique 6, pour recevoir les données à transmettre à cette unité périphérique ou pour recevoir les données à transmettre à l'un des processeurs 2, 3. Les moyens de commande 21 comprennent aussi un circuit 30 contrôlant le code des données échangées sur le bus local 17 et reliant ce bus avec le registre d'entrée et de sortie 27. Ce circuit de contrôle peut être constitué, de façon connue, par une mémoire tampon 29 reliée au bus local 17 et au registre d'entrée et de sortie 27, ainsi qu'un dispositif 30 relié à cette mémoire tampon 29, pour contrôler le code de type cyclique des données échangées sur le bus 17.

Les moyens de sélection 26 comprennent pour chaque contrôleur de bus d'échange un circuit de commande d'écriture ou de lecture, associé au microprocesseur de gestion, pour commander, par l'intermédiaire du contrôleur correspondant, la lecture ou l'écriture des informations sur les bus d'échanges 9, 10.

Les moyens de sélection 26 comprennent aussi un circuit de commande d'écriture ou de lecture, relié au microprocesseur de gestion 22 et au registre d'entrée et de sortie 27, pour commander la lecture des données qui sont fournies par l'unité périphérique 6 et qui sont contenues dans le registre d'entrée et de sortie 27, ou pour commander l'écriture dans ce registre, de données qui proviennent du bus local 17 et qui sont fournies par l'un des ensembles de traitement 2, 3.

Les moyens de sélection 26 sont bien connus dans l'état de la technique et n'ont pas besoin d'être décrits ici en détail.

L'ensemble qui vient d'être décrit fonctionne de la manière suivante : lorsque l'ensemble de traitement 4 par exemple souhaite accéder à l'unité périphérique 6, il envoie au microprocesseur de gestion 22 un bloc de données appelé bloc de commande. En fonction de la disponibilité du périphérique 6, par rapport à d'autres demandes que celle de l'ensemble de traitement 5 par exemple, le microprocesseur de gestion 22 répond par l'émission d'un bloc de données appelé « accusé de réception » commande et positionne les commandes nécessaires au périphérique 6 sur le bus de commande 24, avec, si nécessaire, contrôle des états du périphérique sur le bus d'état 25. Ensuite lorsque, par exemple l'ensemble de traitement 4 souhaite écrire des données dans le périphérique 6, il envoie son bloc de données sur le bus 9 à destination de la mémoire tampon 29. Sous le contrôle du microprocesseur 22 le dispositif de contrôle 30 vérifie l'absence d'erreur dans le bloc de données. Ce bloc de données est enfin transmis de la mémoire tampon 29 au périphérique 6 par le registre d'entrée et de sortie 27. Après lecture du bus d'état 25, le microprocesseur 22 envoie à l'ensemble de traitement 4 un bloc de données appelé compte rendu d'exécution précisant si le transfert global des données a été correctement exécuté jusqu'au périphérique 6.

Dans ce qui précède l'échange élémentaire d'information fonctionne de la manière suivante : lorsque l'ensemble de traitement 4 par exemple, souhaite envoyer une donnée élémentaire à l'ensemble de couplage 1, le contrôleur de bus 18 envoie au moyen de sélection 26 une demande REQ. Le moyen de sélection 26 fournit un signal d'acceptation de demande ACQ et transfère la donnée élémentaire, dans la mémoire tampon 29, grâce au bus local 17, en envoyant au contrôleur de bus 18, un signal de commande de lecture R.

De la même manière, le moyen de sélection 26 fournit également au registre d'entrée ou de sortie 27, un signal W de commande d'écriture de données. Les données sont transférées dans ce registre, après avoir été renregistrées dans la mémoire tampon 29, de manière que le dispositif 30 contrôle le code cyclique de ces données. Les autres informations telles que les commandes ou les états, qui sont transmises par le bus spécifique 9 et qui proviennent de l'ensemble de traitement 4, transitent sur le bus local 17 ; elles sont traitées par le microprocesseur de gestion 22, de manière à être fournies à l'unité périphérique 6. Les mêmes opérations seraient effectuées si l'unité périphérique 6 émettait une demande pour accéder à l'ensemble de traitement 4 ou à l'ensemble de traitement 5.

Il est bien évident que dans l'ensemble qui vient d'être décrit, les moyens utilisés auraient pu être remplacés par des moyens équivalents, sans sortir du cadre de l'invention.

## Revendications

1. Dispositif de couplage universel pour la mise en communication d'ensembles de traitement (4, 5) d'informations et d'au moins une unité périphérique (6), chaque ensemble (4 ou 5) de traitement comprenant au moins un processeur (2 ou 3) et un bus d'échanges (9 ou 10) pour échanger des données avec l'unité périphérique (6), comprenant des contrôleurs de bus (18, 19) reliés respectivement aux bus d'échanges (9, 10) et à un bus local (17) lui-même relié à l'unité périphérique (6) par l'intermédiaire de moyens de commande (21) d'échanges de données et de traitements des informations de commande fournies par les processeurs et des informations d'états de l'unité périphérique, les contrôleurs de bus étant aptes à gérer les échanges d'informations sur les bus d'échanges (9, 10) et sur le bus local (17) ainsi que toute demande faite par un processeur pour accéder à l'unité périphérique via le bus local (17) caractérisé en ce que les moyens de commande (21) comprennent un microprocesseur (22) de gestion de priorités des demandes d'accès faites par les processeurs (2, 3) et de traitement des informations de commande fournies par le processeur demandant un accès au bus local et des informations d'état de l'unité périphérique, ces informations étant échangées sur le bus local (17), ce microprocesseur de gestion étant relié à l'unité périphérique (6) et aux contrôleurs de bus (18, 19), des moyens de sélection (26) reliés aux contrôleurs de bus (18, 19) et commandés par le microprocesseur de gestion, pour sélectionner en fonction des priorités, le contrôleur apte à assurer un échange de données sur le bus local (17), et un registre tampon (27) d'entrée et de sortie relié aux contrôleurs par le bus local (17) et à l'unité périphérique (6), pour recevoir les données à transmettre à l'unité périphérique (6) ou pour recevoir les et à transmettre données provenant de l'unité périphérique et à transmettre à l'un des processeurs (2, 3), chaque processeur (2 ou 3) souhaitant accéder à l'unité périphérique (6) envoyant au microprocesseur (22) de gestion un bloc d'informations de commande, le microprocesseur de gestion (22) envoyant au processeur le plus prioritaire un bloc d'informations « d'accusé de réception » et appliquant les informations de commande à l'unité périphérique et au registre tampon pour que les données de l'ensemble de traitement soient transmises à l'unité périphérique via le registre tampon, ou que les données de l'unité périphérique soient transmises à l'ensemble de traitement via le registre tampon.

2. Ensemble de couplage selon la revendication 1, caractérisé en ce que les moyens de commande (21) comprennent en outre un circuit de contrôle (28) de code des données reliant le bus local (17) avec le registre tampon (27) d'entrée et de sortie.

3. Ensemble de couplage selon la revendication 2, caractérisé en ce que le circuit de contrôle (28) comprend une mémoire tampon (29) reliée au bus local (17) et au registre tampon d'entrée et de sortie (27), et un dispositif (30) relié à cette mémoire (29) pour contrôler un code de type « cyclique » des données.

## Claims

1. Universal coupling means for linking information processing systems (4, 5) and at least one peripheral unit (6), each processing system (4 or 5) comprising at least one processor (2 or 3) and an exchange bus for exchanging information with the peripheral unit (16), comprising bus controllers (18, 19) connected respectively to the exchange buses (9, 10) and to a local bus (17), itself connected to the peripheral unit (6) by means (21) for controlling exchanges of data and for processing control supplied by the processors and state information from the peripheral unit, the bus controllers being able to control information exchanges on the exchange buses (9, 10) and on the local bus (17), as well as any request made by a processor for access via the local bus (17) to the peripheral unit, characterized in that the control means (21) comprise a microprocessor (22) for controlling the priorities of the access requests by the processors (2, 3) and the processing of control information supplied by the processor requesting access to the local bus and state information from the peripheral unit, said information being exchanged on the local bus (17), said control microprocessor being connected to the peripheral unit 6 and to the bus controllers (18, 19), selection means (26) connected to the bus controllers (18, 19) and controlled by the control microprocessor so as to select, as a function of priorities, the controller able to ensure a data exchange on the local bus (17) and an input and output buffer memory (27) with input and output connected to the controllers by the local bus (17) and to the peripheral unit (6) for receiving the data to be transmitted to the peripheral unit (6) or for receiving the data from the peripheral unit and for transmitting to one of the processors (2, 3), each processor (2 or 3) wishing to have access to the peripheral unit (6) supplying a command information block to the control microprocessor (22), which supplies to the processor with the highest priority a « acknowledgement of reception » information block and applying the command informations to the peripheral unit and to the buffer memory, so that the data from the processing system is transmitted to the peripheral unit via the buffer memory, or the data from the peripheral unit are transmitted to the processing system via the buffer memory.

2. Coupling means according to claim 1, characterized in that the command means (21) also comprise a data code checking circuit (28) connecting the local bus (17) to the input and output buffer memory (27).

3. Coupling means according to claim 2, characterized in that the checking circuit (28) comprises a buffer memory (29) connected to local bus (17) and to the input and output memory (27) and a device (30) connected to said memory (29) for checking a « cyclic » data code.

## Patentansprüche

1. Universelle Kopplungsvorrichtung für die Kommunikation zwischen Informationsverarbeitungssystemen (4, 5) und mindestens einer peripheren Einheit (6), wobei jedes Verarbeitungssystem (4 oder 5) mindestens einen Prozessor (2 oder 3) und einen Austauschbus (9 oder 10) zum Austausch von Daten mit der peripheren Einheit (6) aufweist, mit Bussteuereinrichtungen (18, 19), die jeweils mit den Austauschbussen (9, 10) und einem örtlichen Bus (17) verbunden sind, welcher selbst mit der peripheren Einheit (6) mittels Steuereinrichtungen (21) für den Datenaustausch und die Verarbeitung von von den Prozessoren gelieferten Befehlsinformationen und von Zustandsinformationen der peripheren Einheit verbunden ist, wobei die Bussteuereinrichtungen den Informationsaustausch auf den Austauschbussen (9, 10) und auf dem örtlichen Bus (17) sowie jegliche Anforderung verwalten können, die von einem Prozessor erfolgt, um über den lokalen Bus (17) Zugriff zu der peripheren Einheit zu erhalten, dadurch gekennzeichnet, daß die Steuereinrichtungen (21) umfassen einen Verwaltungsmikroprozessor (22) für die Prioritäten der Zugriffsanforderungen, die von den Prozessoren (2, 3) erfolgen, und für die Verarbeitung von Befehlsinformationen, die von dem Zugriff zu dem lokalen Bus verlangenden Prozessor geliefert werden, und von Zustandsinformationen der peripheren Einheit, wobei diese Informationen über den örtlichen Bus (17) ausgetauscht werden und der Verwaltungsmikroprozessor mit der peripheren Einheit (6) und den Bussteuereinrichtungen (18, 19) verbunden ist, Auswählmittel (26), die mit den Bussteuereinrichtungen (18, 19) verbunden sind und von dem Verwaltungsmikroprozessor gesteuert werden, um als Funktion der Prioritäten die Steuereinrichtung auszuwählen, die einen Datenaustausch auf dem örtlichen Bus (17) sicherstellen kann, und ein Eingangs- und Ausgangspufferregister (27), welches mit den Steuereinrichtungen über den örtlichen Bus (17) und mit der peripheren Einheit (6) verbunden ist, um die zu der peripheren Einheit (6) zu übertragenden Daten zu empfangen oder um die von der peripheren Einheit herkommenden und zu einem der Prozessoren (2, 3) zu übertragenden Daten zu empfangen, daß jeder Prozessor (2 oder 3), der Zugriff zu einer peripheren Einheit (6) wünscht, dem Verwaltungsmikroprozessor (22) einen Block Befehlsinformationen schickt, daß der Verwaltungsmikroprozessor (22) dem Prozessor mit der höchsten Priorität einen Informationsblock « Empfangsbestätigung » sendet und die Befehlsinformationen auf die periphere Einheit und das Pufferregister anwendet, damit die Daten des Verarbeitungssystems zu der peripheren Einheit über das Pufferregister übertragen werden oder damit die Daten der peripheren Einheit über das Pufferregister zu dem Verarbeitungssystem übertragen werden.

2. Kopplungssystem nach Anspruch 1, dadurch gekennzeichnet, daß die Steuereinrichtungen (21) ferner einen Steuerkreis (28) für Datencode umfaßt, der den örtlichen Bus (17) mit dem Eingangs- und Ausgangspufferregister (27) verbindet.

3. Kopplungssystem nach Anspruch 2, dadurch gekennzeichnet, daß der Steuerkreis (28) einen Pufferspeicher (29), der mit dem örtlichen Bus (17) und dem Eingangs- und Ausgangspufferregister (27) verbunden ist, und eine Einrichtung (30) aufweist, die mit diesem Speicher (29) verbunden ist, um einen Datencode der « zyklischen » Art zu steuern.